Europäisches Patentamt

European Patent Office

Office européen des brevets

(11) Publication number: **0 246 937 B1**

# EUROPEAN PATENT SPECIFICATION

(45) Date of publication of patent specification: **17.06.92**    (51) Int. Cl.5: **G01N  23/203**, E01C 19/28

(21) Application number: **87400864.2**

(22) Date of filing: **15.04.87**

(54) **Nuclear radiation apparatus and method for dynamically measuring density of test materials during compaction.**

(30) Priority: **22.05.86 US 865776**

(43) Date of publication of application:
**25.11.87 Bulletin  87/48**

(45) Publication of the grant of the patent:
**17.06.92 Bulletin  92/25**

(84) Designated Contracting States:
**AT BE CH DE ES FR GB GR IT LI LU NL SE**

(56) References cited:
**EP-A- 0 108 845**
**US-A- 3 341 706**

**INTERNATIONAL CONSTRUCTION, vol. 22,
no. 3, March 1983, page 140, Havwards
Heath, Sussex, GB; "New products"**

**CIVIL ENGINEERING, Mai 1983, pages 40-43,
London, GB; "Product profile"**

**INTERNATIONAL CONSTRUCTION, vol. 22,
no. 8, August 1983, pages 59,61, Havwards
Heath, Sussex, GB; L. FORSSBLAD: "New
trends in compaction"**

**CIVIL ENGINEERING, January 1984, pages**

**42-44, London, GB; J.D. LATHAM: "Aids to-
wards better compaction"**

(73) Proprietor: **TROXLER ELECTRONIC LABORA-
TORIES, INC.
Post Office Box 12057 3008 Cornwallis Road
Research Triangle Park North Carolina
27709(US)**

(72) Inventor: **Troxler, William F., Sr.
P.O. Box 12057 Research Triangle Park
North Carolina 27709(US)**

(74) Representative: **Orès, Bernard et al
Cabinet ORES 6, Avenue de Messine
F-75008 Paris(FR)**

## Description

### Field and Background of the Invention

The present invention relates to an apparatus and method for determining the density of test materials, and more particularly to a nuclear radiation measurement apparatus and method for measuring the density of soil, asphaltic materials and the like during movement of the radiation measurement apparatus across the surface of the material which is undergoing measurement.

Nuclear radiation gauges for determining the density of soil and asphaltic materials are well-known, as described for example in U.S. Patent 2,781,453. Such gauges employ the phenomenon of Compton scattering of gamma rays and are known by those skilled in the art as "scatter" gauges.

Such gauges typically take the form of a hand held portable instrument which is positioned on the surface of the test material for a predetermined period of time while backscattered radiation is counted to obtain a density reading. Devices of this type have been widely used and well accepted in the industry for obtaining rapid non-destructive density measurements of the test material. The density gauges are particularly useful in determining the degree of compaction of soil or asphalt during the construction of roadbeds and pavement surfaces, in which heavy rollers or compactors are rolled back and forth across the surface and density readings are made periodically using the portable stationary nuclear density gauges of the type described above.

It has been recognized that it would be quite desirable to obtain a readout of density continuously during the compaction operation, rather than periodic spot density readings. This approach would give an average or integrated density reading over a large area rather than an instantaneous spot reading, and would also make it possible to more rapidly respond to changes in the density readouts during the compaction operation. To this end, several movable, dynamically reading nuclear density gauges have been proposed. One such gauge is in the form of a wheeled unit and employs a pair of small cylindrical rollers as wheels with a nuclear source and detector mounted between the rolls in a suspended, non-contacting relationship with the underlying test surface. The gauge rides along the pavement surface and may be connected to and pulled by a pavement compactor vehicle. Another such gauge, described in published European Patent Application 108,845, has the nuclear radiation source and detector mounted inside of a cylindrical roller, and the roller may be manually pushed along the pavement surface or propelled therealong by connecting it to a pavement compactor vehicle.

In addition, Swift et al. Patent US 3,341,706 describes an apparatus and method wherein a nuclear gauge is mounted from a trailer above the surface of a pavement and is utilized for measuring and logging the density. Another roller mounted compaction meter is described in Civil Engineering, May 1983, pages 40-43, "Product Profile".

Both of these gauges assume a constant spacing (air gap) beween the source/detector system and the underlying pavement surface. However, the density reading obtained from a backscatter gauge through an air gap is quite sensitive to variations in the size of the gap. During operation, any buildup of asphalt on the rollers will increase the effective diameter of the rollers and alter the size of the air gap between the source/detector system and the surface of the underlying test material, introducing error in the density reading.

It is an object of the present invention to provide a nuclear density measurement apparatus and method for dynamically measuring pavement density and which overcomes the above-noted disadvantages and limitations of the prior art.

### Summary of the Invention

In accordance with the present invention an apparatus and method is provided in which the nuclear source/detector system is mounted for movement in spaced relation above the surface of the test material and wherein the spacing between the nuclear source/detector system and the underlying test surface is monitored as the nuclear density reading is being taken, whereby any variations in the spacing are taken into account and corrected for during the measurement.

The density measurement apparatus of the present invention broadly comprises nuclear gauge means comprising a nuclear radiation source and a nuclear radiation detector means, said source and said detector means being mounted in predetermined spaced relation from one another for emitting nuclear radiation into the test material and for detecting backscattered radiation from the test material; means for mounting the gauge means in spaced relation from the surface of the test material; means associated with said gauge means for measuring the spacing of the gauge means from the surface of the test material; and means cooperating with the detector means and with said distance measuring means for determining therefrom the density of the test material.

In accordance with the method aspects of the invention, a method is provided for measuring the density of a test material using a nuclear radiation backscatter gauge including a nuclear radiation source and nuclear radiation detector means positioned in spaced relation to the source, and wherein the method comprises the steps of: moving the source and detector along the test material while maintaining the source and detector in spaced relation above the surface of the test material to form an air gap therebetween, obtaining a count of the photons which are backscattered to the detector by the test material, obtaining a measurement which represents the size of the air gap between the surface of the test material and the source/detector means, and correcting the count of backscattered photons based upon the obtained measurement of the air gap to compensate for the effect of the air gap and to thereby determine the density of the test material.

The method and apparatus of the present invention are especially suited for use during the compaction of soil or pavement material using a compactor vehicle, and in accordance with a further aspect of the present invention there is provided a nuclear radiation gauge which is mounted on a compactor vehicle for providing the operator of the vehicle with a readout of the density or degree of compaction during operation of the vehicle. The compactor vehicle has rollers for compaction of materials such as soil, asphalt pavement and the like and a vehicle chassis connected to the rollers. In combination with this there is provided a nuclear density gauge means for measuring the density of the material during operation of the compactor vehicle. The gauge means comprising a nuclear radiation source, nuclear radiation detector means mounted in a predetermined spaced relation from the source, and means for suspendingly mounting said source and said detector means from said vehicle chassis with the source and detector means being located in predetermined spaced relation from the surface of the material undergoing compaction so that the source is positioned for emitting nuclear radiation into the air space beneath the gauge means and into the material and the detector means is positioned for detecting backscattered radiation from the material.

## Brief Description of the Drawings

Some of the features and advantages of the invention having been stated, others will become apparent from the detailed description which follows and from the accompanying drawings, in which --

Figure 1 is a side elevational view of a compactor vehicle upon which is mounted a nuclear density gauge in accordance with the present invention;

Figure 2 is a top elevational view thereof;

Figure 3 is a perspective view thereof from the underside;

Figure 4 is a vertical sectional view through the compactor vehicle taken substantially along the line 4-4 of Figure 1 and showing the arrangements for mounting the detector unit in suspended relation a short distance above the pavement surface and for retracting the detector unit during non-use;

Figure 5 is an enlarged view of the detector unit of Figure 4, with portions of the housing thereof broken away to show the interior components; and

Figure 6 is a schematic diagram of the electronic components of the instrument.

## Description of the Illustrated Embodiment

Referring now more specifically to the drawings, the reference character 10 generally indicates a compactor vehicle of the type which is conventionally used for rolling and compacting soils, paving materials and the like. The compactor vehicle includes a chassis 11 and large diameter smooth surfaced rollers 12, 13, mounted to the chassis 11 and serving as the wheels of the compactor vehicle. As illustrated, a driver's seat 14 is located in the central portion of the vehicle chassis, and suitable controls 15 are provided to enable the driver to control the direction and speed of the vehicle. As is conventional, suitable motor means (not shown) is provided for propelling the vehicle along the pavement.

The nuclear density measurement apparatus of the present invention comprises two units, a measurement unit 20 mounted beneath the compactor vehicle and located close to the surface of the pavement, and a console unit 40 accessible to the driver's seat 14 at the top of the vehicle. The measurement unit 20 and the console unit 40 are interconnected by a cable 21. The console unit 40 includes a keyboard 41 by which the operator may control the operation of the gauge and a display 42 by which the density reading obtained by the gauge as well as other information, is communicated to the operator. The mounting of the components of the measurement apparatus in this manner makes it possible to measure the pavement density during the operation of the compactor vehicle, and to rapidly provide the operator of the vehicle with a readout of pavement density. This makes it possible for the vehicle operator to immediately know when he has completed a sufficient number of rolling passes to achieve a desired degree of compaction.

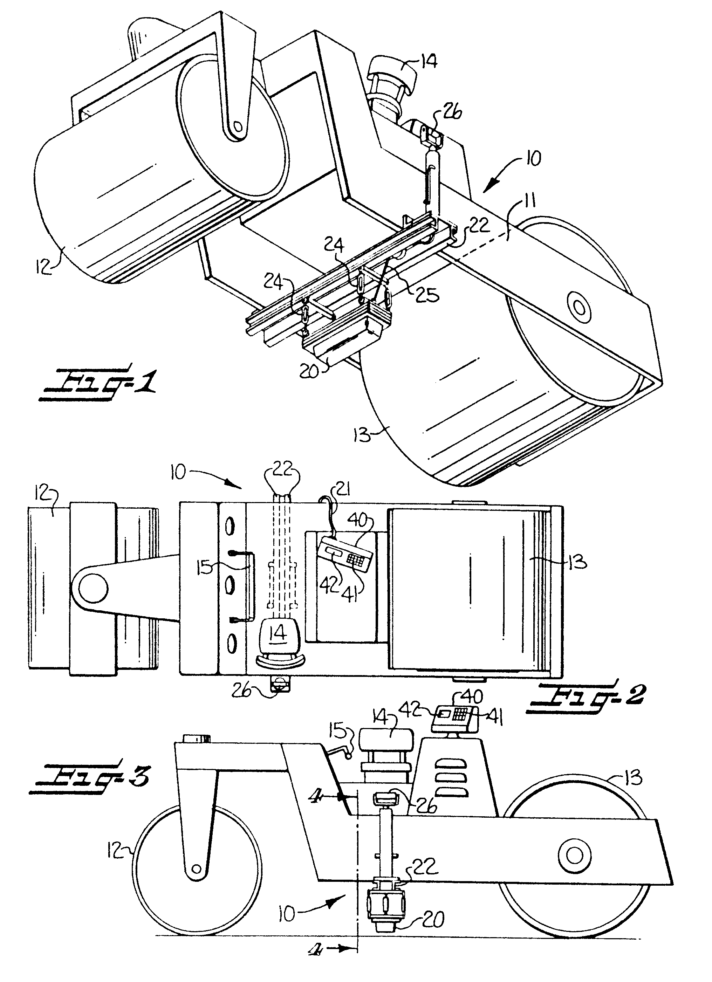

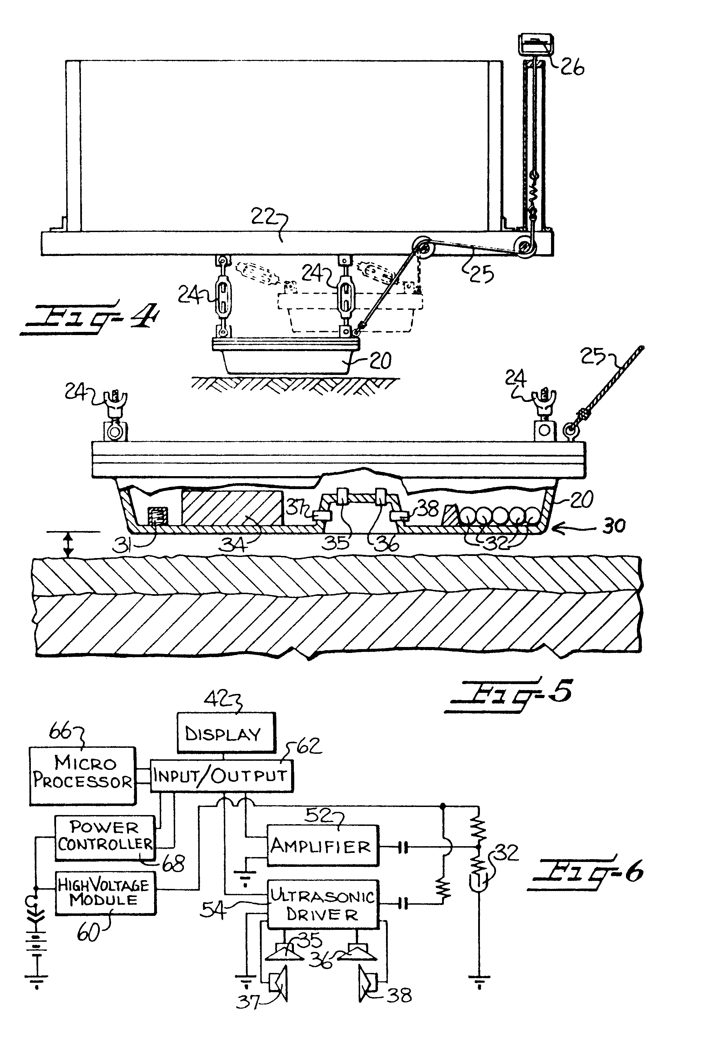

As best seen in Figure 3, means is provided on the underside of the compactor vehicle for mounting the measurement unit 20 in suspended relation a short distance, above the pavement surface. In the particular embodiment illustrated, the mounting means includes an elongate beam 22 mounted to the chassis 11 of the compactor vehicle and extending transversely thereacross. The measurement unit is suspended from the beam 22 by three adjustable mounting brackets 24. Brackets 24 are pivotally mounted to the beam, and in turn to the measurement unit 20 to provide freedom of movement to the measurement unit in all directions. Thus in the event that the measurement unit strikes an obstruction protruding above the pavement surface, it can freely swing out of the way and then return to its normal suspended operative position. As seen in Figure 4, the mounting brackets 24 are constructed in the form of turn-buckles, to permit adjusting the height of the measurement unit and the spacing between the undersurface of the measurement unit 20 and the pavement surface. Nominally, this distance is about 1/2 inch (1.3 cm.).

As is also best seen in Figures 3 and 4, means is provided for raising the unit 20 from its lowered operative position to a retracted non-use position where the measurement unit is safe from accidental contact with obstructions and the like. In the embodiment illustrated this takes the form of a cable 25 connected to measurement unit and an actuator handle 26 associated with the cable 25 and which is positioned at a location accessible to the operator.

Prior to further discussion of the structure and operation of the gauge, it will be helpful to review some of the underlying principles of nuclear density gauge operation, particularly as applied to soil density measurement through an air gap.

The simplest, but least accurate method of measuring density involves the so-called backscatter method. To make this measurement, the source and detectors are both on the surface of the soil and gamma photons passing into the soil are scattered back to the detectors. If the soil had a density of zero, there would be nothing to cause scattering and the number of photons backscattered to the detector would be essentially zero. As the density of the soil increases, the number of backscattered photons increase with increase in density to a point where the backscattered photons are approximately equal to the losses due to additional scattering and absorption. The quantity of backscattered photons detected then becomes an approximate negative exponential function as the count decreases with increasing density of the soil.

The backscatter method, while simple to perform, is subject to error from various factors including surface roughness, soil composition, etc. Soil composition errors can be particularly significant. In an effort to improve accuracy and reduce soil composition error, the so-called "air gap density" method was developed. In this method a measurement is made with the gauge raised above the soil a predetermined height to form an air gap and a reading is obtained based upon both the thickness of the air gap and the density of the top portion of the soil. The air gap measurement can be used in combination with a flush, backscatter measurement to partially cancel out the composition error. Prior measurement methods have not been able to obtain a sufficiently accurate direct measurement of soil density through an air gap. Among other reasons, this is due to the fact that the counts are very sensitive to the size of the air gap. As the size of the gap increases, the count rate increases rapidly, since the soil density becomes a much less significant part of the average density seen by the detector.

In accordance with the present invention the density measurement is taken through an air gap, and means is provided for accurately measuring the air gap during the count and for adjusting the count rate in accordance with the measured air gap distance to obtain an accurate indication of soil density. The measurement of the air gap distance can be accomplished in various ways in accordance with the broad aspects of the present invention, including the use of ultrasonic means, laser means and capacitance, as well as nuclear methods. The preferred means and method as employed in the embodiment illustrated herein employs ultrasonic methods.

As best seen in Figure 5, the measurement unit 20 comprises a housing 30 having a relatively smooth planar undersurface which is oriented generally parallel and in spaced relation to the pavement surface. The housing 30 encloses a suitable radiation source 31 and a detector means 32. The radiation source may be a CS-137 source of gamma radiation and the detector means may take the form of Geiger-Mueller tubes sensitive to photons. As illustrated, the source 31 is located adjacent to one end of the housing and the detector means 32 is mounted adjacent to the opposite end of the housing. Shielding 34 is provided around the source and around the detector means 32, as is conventional, to prevent radiation from reaching the detector means in a direct path from the source. Additionally, means (not shown) is provided for completely shielding the radiation source when the gauge is not being used for measurement.

As noted earlier, in an air gap measurement technique, the amount of radiation reaching a detector is a function of both the size of the air gap and the density of the material. The attenuation relationship for a single detector means, e.g. for the detector means 32 illustrated may be expressed as follows:

$$CR = A \exp(-BD) - C \qquad (I)$$

where:

| | |
|---|---|
| CR | is the count ratio, the detector count normalized by a standard reference count; |
| D | is the density; and |
| A,B,C | are the usual exponential curve fit parameters for the density vs. count ratio relationship. |

The constants A, B, and C are dependent on the size of the air gap between the gauge and the test material. If the air gap is measured, one can come up with relationships for A, B, and C such that:

$$A = a_1 + a_2 G + a_3 G^2 + a_4 G^3$$

$$B = b_1 + b_2 G + b_3 G^2 + b_4 G^3 \qquad (II)$$

$$C = c_1 + c_2 G + c_3 G^2 + c_4 G^3$$

where

$A, B, C =$
constants from density equation I;
$a_1, a_2, a_3, a_4 =$
constants determined by gauge calibration;
$b_1, b_2, b_3, b_4 =$
constants determined by gauge calibration;
$c_1, c_2, c_3, c_4 =$
constants determined by gauge calibration; and
$G =$
Air gap distance between the gauge and the test material.

Knowing the air gap distance, one can calculate A, B, C and then get D from the equation:

$$D = (1/B) \ln (A/(CR + C)) \qquad (III)$$

In the illustrated embodiment of the invention ultrasonic means is utilized for measuring the air gap G between the test material and the measurement unit 20. As shown in Figure 5, the ultrasonic means includes an ultrasonic transmitter 35 and a cooperating ultrasonic receiver 36 which are mounted in a recessed area or well on the underside of the housing 30 and aimed downwardly for measuring the distance to the underlying pavement surface. Additionally, the ultrasonic means also includes a reference transmitter 37 and cooperating receiver 38 mounted in the recessed well a predetermined distance apart and oriented generally horizontally toward one another for measuring the speed of sound in the air above the heated pavement or other underlying surface and producing a reference signal. This reference signal is utilized by the associated circuitry 54 to compensate for variations in the speed of sound due to changes in air temperature in the measuring region. These components and the associated electronic circuitry which is used in association therewith, as indicated at 54, are commercially available and their selection and use are within the capabilities of persons skilled in this art.

It should be understood that the foregoing description is intended as an illustration of one of a number of possible ways in which a density measurement can be obtained from the detector count data, and persons skilled in the appropriate arts will recognize that other particular solutions are possible within the broad scope of the present invention. For example, in commonly owned U. S. patent 4,525,854 and in commonly owned copending U.S. patent application Serial No. 681,302 filed December 13, 1984 techniques are disclosed whereby it is possible to obtain density readings which are weighed toward predetermined strata within a test material, and these principles may be utilized for obtaining density measurements in the present invention.

Referring now to Figure 6, the detector 32 is electrically connected with a corresponding amplifier 52. Additionally, as is required, the detector is connected with a source 60 of high voltage. Output from the amplifier 52 is directed to an input/output circuit generally indicated at 62 and is available through such circuitry to an electronic computing device shown in the form of a microprocessor 66 and to display 42. The ultrasonic transmitter 35 and receiver 36 are connected to an ultrasonic driver which provides as an output a signal representative of the air gap distance. This signal is provided to the microprocessor through the input/output circuit 62. Power to the entire device is supplied by a power controller 68.

The microprocessor performs in the circuit of the present invention (as schematically illustrated in Figure 6) a number of functions including governing time intervals for gauging in both "standard" and "measure" modes. The microprocessor also serves the function of a counter and recorder operatively associated with the detector for separately counting and recording the measured radiation information from the detectors and the distance signal from the ultrasonic device. In this regard, the radiation information preferably takes the form of a total radiation count for each Geiger-Mueller detector per time interval. In other embodiments the radiation information may take other forms, such as radiation count rates.

The microprocessor also serves to store, in appropriate form, the instructions needed for converting the amplified radiation counts from detector means 32 into density values and for displaying the density values to the operator. Other functions, generally known to persons appropriately skilled in the art, are performed by the microprocessor.

**Claims**

1. A nuclear radiation backscatter gauge (20) for measuring the density D of a test material, said gauge (20) comprising a nuclear radiation source (31), nuclear radiation detector means (32) mounted in predetermined spaced relation from said source (31), a sensor unit including a housing (30) enclosing said source (31) and said detector means (32), means (22) for mounting said housing (30) in spaced relation from the surface of the material so that the source (31) is positioned for emitting nuclear radiation through an air gap beneath the sensor unit (20) and into the material and the detector means (32) is positioned for detecting backscattered radiation from the material, and means (66) cooperating with said detector means (32) for obtaining a count of the photons which are backscattered to the detector means (32) by the test material, characterized in that the gauge (20) includes means (35,36,54) for ultrasonically measuring the size of the air gap between the surface of the test material and the detector means (32), means (37,38,54) for compensating for variations in the speed of sound due to changes in air temperature in the measuring region, and means (66) for calculating the density D of the test material as a function of said count of backscattered photons and said measurement of the air gap.

2. A nuclear radiation backscatter gauge according to Claim 1 wherein said means for calculating the density of the test material as a function of said count of backscattered photons and said measurement of the air gap comprises computer means (66) including a stored set of instructions for:
   (a) calculating calibration constants A, B and C for the density equation

   $$D = (1/B) \ln (A/(CR + C))$$

   as a function of the air gap measurement using an empirically derived relationship between the air gap measurement and such constants; and
   (b) applying the thus calculated calibration constants A, B and C in the density equation

   $$D = (1/B) \ln (A/(CR + C))$$

   to thereby determine the density of the test material.

3. A compactor vehicle (10) having rollers (12,13) for compaction of materials such a soil, asphalt pavement and the like, said rollers also serving as wheels for the compactor vehicle (10), a chassis (11) connected to the rollers (12,13) for receiving thereon an operator of the compactor vehicle (10), and motor means for propelling the compactor vehicle (10) along the surface of the material,
   characterized in that a nuclear density gauge means according to Claims 1 and 2 is mounted on the compactor vehicle (10) with said sensor unit (20) thereof being suspended beneath the vehicle chassis (11) for measuring the density of the material during operation of the compactor vehicle (10).

4. Compactor vehicle according to Claim 3 characterized in that means (24,25,26) are provided for raising the sensor unit (20) from a lowered operative suspended position to a retracted non-use position.

5. A method of measuring the density D of a test material using a nuclear radiation backscatter gauge (20) including nuclear radiation source (31) and nuclear radiation detector means (32) positioned in spaced relation to the source (31), said method comprising moving the source (31) and detector (32) relative to the test material while maintaining the source (31) and detector (32) in spaced relation above the surface of the test material to form an air gap therebetween, obtaining a count (66) of the photons which are backscattered to the detector means (32) by the test material, and determining the density (66) of the test material from the thus obtained count of backscattered photons, characterized in that the method includes the steps of obtaining a measurement which represents the size of the air gap between the surface of the test material and the detector means (32) by ultrasonically measuring the air gap while compensating for variations in the speed of sound due to changes in air temperature in the measuring region, and calculating (66) the density D of the test material as a function of said count of backscattered photons and said measurement of the air gap.

6. Method according to Claim 5 characterized in that said step of calculating the density of the test material as a function of said count of backscattered photons and said measurement of the air gap comprises:

(a) calculating calibration constants A, B and C for the density equation

$$D = (1/B) \ln (A/(CR + C))$$

as a function of the air gap measurement using an empirically derived relationship between the air gap measurement and such constants; and

(b) applying the thus calculated calibration constants A, B and C in the density equation

$$D = (1/B) \ln (A/(CR + C))$$

to thereby determine the density of the test material.

**Revendications**

1. Appareil de mesure à rétrodiffusion de rayonnement nucléaire (20) pour mesurer la densité D d'un matériau en essai, ledit appareil (20) comprenant une source de rayonnement nucléaire (31), un détecteur de rayonnement nucléaire (32) monté à une distance prédéterminée de ladite source (31), une unité de mesure comportant un boîtier (30) qui contient ladite source (31) et ledit détecteur (32), des moyens (22) pour tenir ledit boîtier (30) à une certaine distance de la surface du matériau, de sorte que la source (31) est positionnée pour émettre un rayonnement nucléaire à travers un intervalle d'air au-dessous de l'unité de mesure (20) et dans le matériau et que le détecteur (32) est positionné pour détecter le rayonnement rétrodiffusé par le matériau, et des moyens (66) qui coopèrent avec ledit détecteur (32) pour obtenir un compte des photons qui sont rétrodiffusés vers le détecteur (32) par le matériau en essai, caractérisé en ce que l'appareil (20) comprend des moyens (35,36,54) pour la mesure par ultrasons de la dimension de l'intervalle d'air entre la surface du matériau en essai et le détecteur (32), des moyens (37,38,54) pour compenser les variations de la vitesse du son dues aux variations de température de l'air dans la région de mesure, et des moyens (66) pour calculer la densité D du matériau en essai en fonction dudit compte de photons rétrodiffusés et de ladite mesure de l'intervalle d'air.

2. Appareil de mesure à rétrodiffusion de rayonnement nucléaire suivant la revendication 1, dans lequel lesdits moyens de calcul de la densité du matériau en essai en fonction dudit compte de photons rétrodiffusés et de ladite mesure de l'intervalle d'air comprennent un ordinateur (66) possédant un jeu d'instructions en mémoire pour :

(a) calculer des constantes d'étalonnage A,B et C pour l'équation de densité

$$D = (1/B) \ln (A/(CR + C))$$

en fonction de la mesure de l'intervalle d'air, au moyen d'une relation empirique entre la mesure de l'intervalle d'air et ces constantes ; et

(b) appliquer les constantes d'étalonnage A,B et C ainsi calculées, dans l'équation de densité

$$D = (1/B) \ln (A/(CR + C))$$

afin de déterminer la densité du matériau en essai.

3. Véhicule de compactage (10) comportant des rouleaux (12,13) pour le compactage de matériaux tels que sol, chaussée asphaltée et analogues, lesdits rouleaux servant également de roues pour les véhicules de compactage (10), un châssis (11) relié aux rouleaux (12,13) pour recevoir un conducteur du véhicule de compactage (10), et des moyens moteurs pour propulser le véhicule de compactage (10) sur la surface du matériau, caractérisé en ce qu'un appareil de mesure de densité à rayonnement nucléaire suivant les revendications 1 et 2 est monté sur le véhicule de compactage (10), son unité de mesure (20) étant suspendue sous le châssis du véhicule (11) pour mesurer la densité du matériau pendant le travail du véhicule de compactage (10).

4. Véhicule de compactage suivant la revendication 3, caractérisé en ce que des moyens (24,25,26) sont prévus pour relever l'unité de mesure (20) d'une position suspendue abaissée active à une position rétractée de non utilisation.

5. Procédé de mesure de la densité D d'un matériau en essai au moyen d'un appareil à rétrodiffusion de rayonnement nucléaire (20) comprenant une source de rayonnement nucléaire (31) et un détecteur de rayonnement nucléaire (32) placé à une certaine distance de la source (31), ledit procédé comprenant le déplacement de la source (31) et du détecteur (32) par rapport au matériau en essai tout en maintenant la source (31) et le détecteur (32) à une certaine distance au-dessus de la surface du matériau en essai de manière à définir un intervalle d'air interposé ; l'obtention d'un compte (66) des photons qui sont rétrodiffusés vers le détecteur (32) par le matériau en essai ; et la détermination de la densité (66) du matériau en essai à partir du compte de photons rétrodiffusés ainsi obtenu, caractérisé en ce que le procédé comprend les opérations d'obtention d'une mesure qui représente la dimension de l'intervalle d'air entre la surface du matériau en essai et le détecteur (32), par mesure aux ultrasons de l'intervalle d'air,tout en compensant les variations de la vitesse du son dues aux variations de température de l'air dans la région de mesure ; et de calcul (66) de la densité D du matériau en essai en fonction dudit compte de photons rétrodiffusés et de ladite mesure de l'intervalle d'air.

6. Procédé suivant la revendication 5, caractérisé en ce que ladite opération de calcul de la densité du matériau en essai en fonction du dit compte de photons rétrodiffusés et de ladite mesure de l'intervalle d'air comprend :
(a) le calcul de constantes d'étalonnage (A,B et C) pour l'équation de densité

$$D = (1/B) \ln (A/CR + C))$$

en fonction de la mesure de l'intervalle d'air au moyen d'une relation empirique entre la mesure d'intervalle d'air et ces constantes ; et
(b) l'application des constantes d'étalonnage ainsi calculées A,B et C dans l'équation de densité

$$D = (1/B) \ln (A/(CR + C))$$

afin de déterminer la densité du matériau en essai.

**Patentansprüche**

1. Meßgerät (20) für die Rückstreuung von Kernstrahlung zum Messen der Dichte D eines Testmaterials, wobei das Meßgerät (20) aufweist: eine Kernstrahlungsquelle (31), einen in vorbestimmter Entfernung von der Quelle (31) angebrachten Kernstrahlendetektor (32), eine Sensoreinheit mit einem Gehäuse (30), welches die Quelle (31) und den Detektor (32) umschließt, Mittel (22) zur Montage des Gehäuses (30) in einem Abstand von der Oberfläche des Materials, sodaß die Quelle (31) so angeordnet ist, daß sie Kernstrahlung durch einen Luftspalt unterhalb der Sensoreinheit (20) und in das Material emittiert, und der Detektor (32) so angeordnet ist, daß er von dem Material rückgestreute Strahlung erfaßt, um ein mit dem Detektor (32) zusammenwirkendes Mittel (66), um eine Zählung der Photonen zu erhalten, die von dem Testmaterial zu dem Detektor (32) rückgestreut werden, dadurch gekennzeichnet, daß das Meßgerät (20) Mittel (35, 36, 54) zum Messen der Größe des Luftspalts zwischen der Oberfläche des Testmaterials und dem Detektor (32) mit Hilfe von Ultraschall besitzt, Mittel (37, 38, 54) zur Kompensation der Änderung der Schallgeschwindigkeit zufolge von Ängerungen der Lufttemperatur im Meßbereich sowie Mittel (66) zum Berechnen der Dichte D des Testmaterials in Abhängigkeit von der Zählung der rückgestreuten Photonen und der Messung des Luftspalts.

2. Meßgerät für die Rückstreuung von Kernstrahlung nach Anspruch 1, bei welchem die Mittel zum Berechnen der Dichte D des Testmaterials in Abhängigkeit von der Zählung der rückgestreuten Photonen und der Messung des Luftspaltes Rechnermittel (66) sind, mit einem gespeicherten Satz von Instruktionen für;
(a) die Berechnung von Kalibrierungskonstanten A, B und C für die Dichtegleichung

$$D = (1/B) \ln (A/(CR + C))$$

in Abhängigkeit von der Luftspaltmessung unter Verwendung einer empirisch abgeleiteten Beziehung zwischen der Luftspaltmessung und solchen Konstanten; und
(b) die Anwendung der so berechneten Kalibrationskonstanten A, B und C in der Dichtegleichung,

$$D = (1/B) \ln (A/(CR + C))$$

um hiedurch die Dichte des Testmaterials zu bestimmen.

3. Fahrzeug (10) zum Verdichten mit Walzen (12, 13) zum Verdichten von Material, wie Erdboden, Asphalt, Fahrbahnen und dergleichen, wobei die Walzen auch als Räder für das Fahrzeug (10) zum Verdichten dienen, mit einem mit den Walzen (12, 13) verbundenen Fahrgestell (11), um darauf Platz für eine Bedienungsperson des Fahrzeugs (10) zum Verdichten zu bieten, und mit einem Motormittel, um das Fahrzeug (10) zum Verdichten längs der Oberfläche des Materials vorzutreiben,

dadurch gekennzeichnet, daß ein nukleares Dichtemeßgerät nach Anspruch 1 und 2 auf dem Fahrzeug (10) zum Verdichten montiert ist, wobei dessen Sensoreinheit (20) unterhalb des Fahrzeuggestells (11) aufgehängt ist, um während des Betriebes des Fahrzeugs (10) zum Verdichten die Dichte des Materials zu messen.

4. Fahrzeug zum Verdichten nach Anspruch 3, dadurch gekennzeichnet, daß Mittel (24, 25, 26) vorgesehen sind, um die Sensoreinheit (20) von einer abgesenkten Betriebslage in eine zurückgezogene Außenbetriebslage anzuheben.

5. Verfahren zum Messen der Dichte D eines Testmaterials unter Verwendung eines Meßgeräts (20) für die Rückstreuung von Kernstrahlung, mit einer Kernstrahlungsquelle (31) und mit einem in Abstand von der Quelle (31) angeordneten Kernstrahlungsdetektor (32), wobei das Verfahren beinhaltet, daß die Quelle (31) und der Detektor (32) bezüglich des Testmaterials bewegt werden, während die Quelle (31) und der Detektor (32) in Abstand über der Oberfläche des Testmaterials gehalten werden, wobei ein Luftspalt dazwischen gebildet ist, daß eine Zählung (66) der von dem Testmaterial zu dem Detektor (32) rückgestreuten Photonen erhalten wird, und daß die Dichte (66) des Testmaterials aus der so erhaltenen Zählung der rückgestreuten Photonen bestimmt wird, dadurch gekennzeichnet, daß das Verfahren die folgenden Schritte enthält: Erlangen einer Messung, welche die Größe des Luftspalts zwischen der Oberfläche des Testmaterials und dem Detektor (32) repräsentiert, durch Messen des Luftspalts mittels Ultraschall, während Änderungen der Schallgeschwindigkeit auf Grund von Änderungen der Lufttemperatur im Meßbereich kompensiert werden, und Berechnen (66) der Dichte des Testmaterials in Abhängigkeit von der Zählung der rückgestreuten Photonen und der Messung des Luftspalts.

6. Verfahren nach Anspruch 5, dadurch gekennzeichnet, daß der Schritt des Berechnens der Dichte des Testmaterials in Abhängigkeit von der Zählung der rückgestreuten Photonen und der Messung des Luftspaltes beinhaltet:

(a) die Berechnung von Kalibrierungskonstanten A, B und C für die Dichtegleichung

$$D = (1/B) \ln (A/(CR + C))$$

in Abhängigkeit von der Luftspaltmessung unter Verwendung einer empirisch abgeleiteten Beziehung zwischen der Luftspaltmessung und solchen Konstanten; und

(b) die Anwendung der so berechneten Kalibrationskonstanten A, B und C in der Dichtegleichung,

$$D = (1/B) \ln (A/(CR + C))$$

um hiedurch die Dichte des Testmaterials zu bestimmen.

Fig-1

Fig-2

Fig-3

*Fig-4*

*Fig-5*

*Fig-6*